# EUROPÄISCHE PATENTSCHRIFT

(11) **EP 2 138 256 B1**
(45) Veröffentlichungstag und Bekanntmachung des Hinweises auf die Patenterteilung: **22.06.2011**
(21) Anmeldenummer: 08011472.1
(22) Anmeldetag: 25.06.2008
(51) Int. Cl.: B23D 7/06, B23D 7/10, B23Q 15/007, B23Q 15/22, B24B 33/10, B24B 35/00, F16C 3/28, F16H 21/20

(54) **Einstellbarer Exzenterantrieb für eine Werkzeugmaschine, insbesondere zum Superfinishen oder Honen**
Adjustable excentric drive for a machine tool, in particular for superfinishing or honing
Mécanisme d'entraînement à excentrique réglable pour une machine-outil, en particulier destiné à la superfinition ou l'empierrement

(43) Veröffentlichungstag der Anmeldung: 30.12.2009
(73) Patentinhaber: Supfina Grieshaber GmbH & Co. KG, 77709 Wolfach (DE)
(72) Erfinder: Roser, Jürgen Dipl. -Ing., 77716 Haslach (DE)
(74) Vertreter: Hellwig, Tillmann Johannes

(56) Entgegenhaltungen:
- DE-A1- 3 528 861
- GB-A- 233 742
- GB-A- 884 568
- JP-A- 7 133 545

## Beschreibung

Bei verschiedenen spanenden Bearbeitungen, wie beispielsweise dem Superfinishen, dem Honen, dem Stoßen und dem Hobeln, führt das Werkzeug oszillierende Bewegungen aus. Dabei bedient man sich häufig eines Kurbelzapfens, der an einer Welle mit einem Abstand A von der Drehachse angeordnet ist, um die Drehbewegung eines elektrischen Antriebs in die gewünschte oszillierende Bewegung umzuwandeln.

Da der Hub der oszillierenden Bewegung unter anderem werkstückabhängig ist, ist es wünschenswert, dass der Hub des Kurbelzapfens einstellbar ist.

Bislang gibt es Einstellmöglichkeiten des Hubs bei stillstehendem Werkzeug. Dies hat zur Folge, dass die Einstellung beziehungsweise Veränderung des Hubs der oszillierenden Bewegung zeit- und kostenintensiv ist.

Dabei ist es nicht möglich, über die Steuerung des Hubs des Bearbeitungswerkzeugs die Qualität der in Bearbeitung befindlichen Oberfläche während der Bearbeitung gezielt zu beeinflussen und zu optimieren.

Dokument GB 884 568 zeigt einen einstellbaren Excenterantrieb gemäß dem Oberbegriff von Anspruch 1.

Der Erfindung liegt die Aufgabe zugrunde, einen verbesserten verstellbaren Exzenterantrieb bereitzustellen, der die Einstellung beziehungsweise Veränderung des Hubs eines Kurbelzapfens bei laufendem Betrieb ermöglicht. Dabei soll der Hub stufenlos zwischen einem minimalen Hub hₘᵢₙ und einem maximalen Hub hₘₐₓ einstellbar sein.

Diese Aufgabe wird erfindungsgemäß gelöst durch einen einstellbaren Exzenterantrieb gemäß Anspruch 1.

Durch die Koppelung des Kurbelzapfens mit den spiralförmigen Führungsmitteln und die Verdrehbarkeit des Einstellrings relativ zur ersten Welle und damit auch relativ zu dem Kurbelzapfen ist, ist es möglich, stufenlos die Exzentrizität des Kurbelzapfens beziehungsweise den Hub des Kurbelzapfens einzustellen.

Diese Einstellung kann mit rotierender erster Welle erfolgen. Der Einstellbereich des Hubs hängt von der Gestaltung der spiralförmigen Führungsmittel ab. So ist es möglich, die Führungsmittel in Form eines exzentrisch zur Drehachse der ersten Welle angeordneten Kreissegments, einer logarithmischen oder archimedischen Spirale auszubilden. Diese Aufzählung ist nur beispielhaft und nicht abschließend. Insbesondere ist es auch möglich, verschiedene Hubbereiche, entsprechend der Steigung der Spirale, an die vorhandenen Anforderung anzupassen. So kann es beispielsweise vorteilhaft sein, bei kleinen Hüben die Steigung der Spirale gering zu wählen, so dass eine sehr feine und genaue Einstellung des Hubs möglich ist. Wenn für eine Schruppbearbeitung große Hübe erforderlich sind, kann die Steigung der spiralförmigen Führungsmittel größer gewählt werden und dadurch mit einem kleinen Verdrehwinkel zwischen Einstellring und erster Welle eine größere Änderung des Hubs vorgenommen werden. Dadurch, dass die Führungsmittel die Exzentrizität des Hubzapfens verändern und der Hub des Kurbelzapfens gleich zweimal der Exzentrizität E ist, kann somit ein sehr weiter Verstellbereich des Hubs des Kurbelzapfens realisiert werden.

Durch die koaxiale Anordnung von erster Welle und Einstellring ist es auch möglich, große Kräfte in radialer Richtung zwischen den Führungsmitteln und dem Kurbelzapfen zu übertragen, so dass auch schwere Bearbeitungen mit entsprechend großen Kräften, die auf das Werkzeug und auf die Führungsmittel und den Kurbelzapfen wirken, über die gesamte Lebensdauer sicher, zuverlässig und übertragen werden können.

Es hat sich als vorteilhaft erwiesen, dass die Führungsmittel als spiralförmige Rippe oder Nut ausgebildet sind und der Kurbelzapfen Rollen oder Zapfen umfasst, welche in radialer Richtung formschlüssig die Rippe umgreifen oder in die Nut eintauchen.

Dadurch dass die Führungsmittel als spiralförmige Rippe ausgebildet sind, kann die Belastbarkeit der Führungsmittel auf einfache Weise den Anforderungen entsprechend angepasst werden, indem der Querschnitt der Rippe entsprechend gewählt wird. Es ist auch möglich, nahezu alle Formen von spiralförmigen Rippen präzise und trotzdem kostengünstig mit Hilfe einer NC-gesteuerten Fräsmaschine herzustellen. Ein weiterer Vorteil dieser Ausführungsform ist, dass zu beiden Seiten dieser Rippe jeweils eine Rolle oder ein Zapfen angeordnet sein kann, wobei die Rollen beziehungsweise die Zapfen mit dem Kurbelzapfen verbunden sind. Dies bedeutet, dass die Rippe in beiden Richtungen der oszillierenden Hubbewegung als Führungsmittel dienen.

Die Kraftübertragung von der Rippe findet in Abhängigkeit von der Hubrichtung im Wechsel über die außen an der Rippe anliegenden Rolle und die innen an der Rippe anliegenden Rolle statt.

Wenn die Rollen beziehungsweise der Abstand der Rollen zueinander einstellbar gestaltet ist, ist es möglich, die Rollen spielfrei an der Rippe anzulegen. Auch kann der Verschleiß der Rippe beziehungsweise der Rolle bei Bedarf nachgestellt werden, so dass über die gesamte Lebensdauer des erfindungsgemäßen Exzenterantriebs eine gleichbleibend hohe Bearbeitungsqualität gewährleistet ist.

In weiterer vorteilhafter Ausgestaltung der Erfindung ist vorgesehen, dass der Einstellring mit einer zweiten Welle verbunden ist und dass die zweite Welle koaxial zu der ersten Welle angeordnet ist. Die zweite Welle kann als Hohlwelle ausgebildet sein und an ihrem Innendurchmesser eine Lagerung für die erste Welle aufweisen. Dadurch ist eine sehr kompakte und leistungsfähige Bauweise möglich. Auch ist es vergleichsweise einfach, die Verstellung des Einstellrings beziehungsweise eine Verdrehung des Einstellrings relativ zur ersten Welle dadurch zu realisieren, dass die zweite Welle relativ zur ersten Welle verdreht wird. Diese Verdrehung der beiden koaxial zueinander angeordneten Wellen wird wegen der starren Verbindung zwischen Einstellring und zweiter Welle unmittelbar auch auf den Einstellring übertragen.

Um das erforderliche Drehmoment von der ersten Welle auf den Kurbelzapfen zu übertragen, ist an der erste Welle eine im Wesentlichen radial zur Drehachse der ersten Welle angeordnete Linearführung für den Kurbelzapfen vorhanden. Diese Linearführung kann in einer einfachen Ausführung als Linearführung an einer Stirnseite der ersten Welle ausgebildet sein. Entsprechend hat dann der Kurbelzapfen einen Führungskörper mit einer Nut, deren Nutbreite dem Abstand der beiden parallel zueinander verlaufenden Flächen der Linearführung der ersten Welle entspricht. Durch diese Linearführung ist erstens eine radiale Verschiebbarkeit des Kurbelzapfens relativ zur Drehachse der ersten Welle gewährleistet. Zum zweiten kann über die Linearführung und die entsprechende Nut in dem Führungsblock des Kurbelzapfens ein Drehmoment zwischen der ersten Welle und dem Kurbelzapfen übertragen werden. Diese Übertragung ist vergleichbar mit einer Klauenkupplung und ermöglicht die Übertragung auch sehr großer Drehmomente.

Um die Unwucht des erfindungsgemäßen Exzenterantriebs unabhängig vom gewählten Hub des Kurbelzapfens möglichst gering zu halten, ist an der ernsten Welle ein Ausgleichsgewicht vorgesehen, dessen radialer Abstand zu der Drehachse der ersten Welle ebenfalls einstellbar ist. Dieses Ausgleichsgewicht ist um 180° versetzt zu den Kurbelzapfen angeordnet.

Die Verstellung des radialen Abstands zwischen dem Ausgleichsgewicht und der Drehachse der ersten Welle erfolgt ebenfalls mit Hilfe des erfindungsgemäßen Einstellrings. Dadurch sind erstens die Mehrkosten für das Ausgleichsgewicht vergleichsweise gering und es kann die Exzentrizität des Ausgleichsgewichts in gleicher Weise wie die Exzentrizität des Kurbelzapfens eingestellt werden. Dies bedeutet nicht nur eine Vereinfachung der Konstruktion, sondern gewährleistet auch, die Unwucht des Kurbelzapfens unabhängig vom eingestellten Hub des Kurbelzapfens durch das Ausgleichsgewicht eliminiert wird.

In weiterer vorteilhafter Ausgestaltung der Erfindung ist vorgesehen, dass die erste Welle und der Einstellring jeweils von einem elektrischen Antrieb angetrieben werden und dass Drehgeschwindigkeit und/oder Phasenlage von erster Welle und Einstellring durch die Steuerung der elektrischen Antriebe eingestellt werden. Dies bedeutet, dass die Antriebsleistung für den Kurbelzapfen durch den elektrischen Antrieb der ersten Welle bereitgestellt wird und der elektrische Antrieb für den Einstellring letztendlich die zur Verstellung des Hubs erforderliche Stellenergie bereitstellt. Wenn der Hub des Kurbelzapfens konstant bleiben soll, rotieren der Einstellring und die erste Welle mit der gleichen Drehzahl. Dies kann durch eine geeignete Ansteuerung der beiden elektrischen Antriebe gewährleistet werden.

Wenn der Hub verstellt werden soll, kann durch eine entsprechende Beschleunigung oder Verzögerung des Einstellrings eine Verdrehung des Einstellrings relativ zur ersten Welle vorgenommen werden.

Eine weitere alternative Ausgestaltung sieht vor, dass die erste Welle und der Einstellring mechanisch miteinander gekoppelt sind und dass zwischen erster Welle und Einstellring Mittel zum Verstellen der Phasenlage von erster Welle und Einstellring vorgesehen sind. Solche Mittel zum Verstellen der Phasenlage können als hydraulischer Schwenkmotor oder als rein mechanische Lösung, wie sie aus Nockenwellenverstellsystemen von Verbrennungsmotoren bekannt sind, realisiert werden.

Weitere Vorteile und vorteilhafte Ausgestaltungen der Erfindung sind der nachfolgenden Zeichnung, deren Beschreibung und den Patentansprüchen entnehmbar.

In der Zeichnung zeigen:
- Figur 1: einen Teillängsschnitt und eine Ansicht von vorne einer ersten Welle und eines Einstellrings,
- Figur 2: eine erste Welle und ein Einstellring sowie ein Kurbelzapfen und ein Ausgleichsgewicht in einer Explosionsdarstellung,
- Figuren 3.1, 3.1 und 3.3: eine Ansicht von vorne auf die erste Welle und den Einstellring in drei verschiedenen Phasenlagen und
- Figuren 4 bis 6: Weitere Ausführungsbeispiele erfindungsgemäßer Einstellvorrichtungen.

### Beschreibung der Ausführungsbeispiele

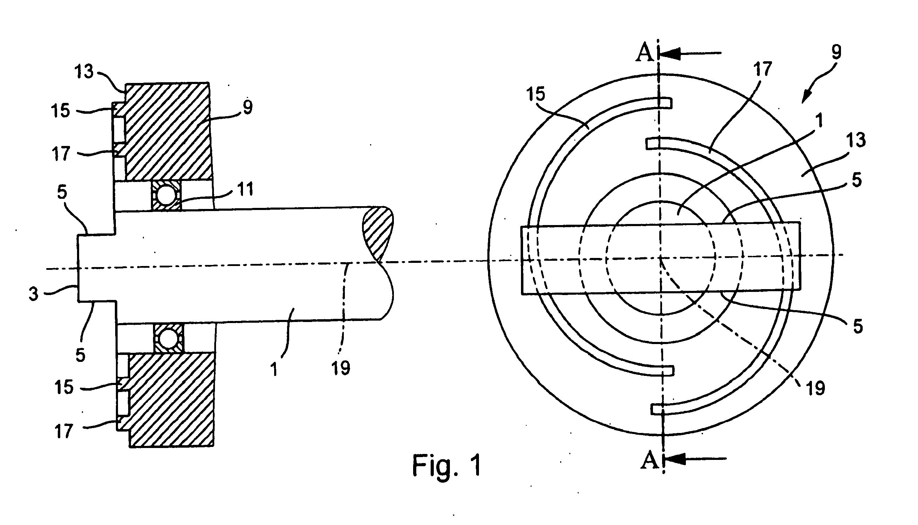

In Figur 1 ist eine erste Welle 1 dargestellt. Die erste Welle 1 ist drehbar in einem nicht dargestellten Gehäuse gelagert. An einer Stirnseite 3 der ersten Welle ist eine Linearführung 5 ausgebildet. Zwischen einem Einstellring 9 und der ersten Welle 1 ist ein Lager 11 angeordnet. Dies bedeutet, dass der Einstellring 9 relativ zur ersten Welle 1 verdrehbar ist. Eine Stirnfläche 13 des Einstellrings 9 weist eine erste Führungsrippe 15 und eine zweite Führungsrippe 17 auf. Die Führungsrippen 15 und 17 sind im Sinne der Erfindung spiralförmig, da der Abstand der Führungsrippen von einer Drehachse 19 der ersten Welle 1 winkelabhängig ist. Bei dem in Figur 1 dargestellten Ausführungsbeispiel sind die spiralförmigen Rippen 15 und 17 als Kreissegmente ausgeführt, die exzentrisch zu der Drehachse 19 angeordnet sind. Es ist jedoch auch möglich, die spiralförmigen Rippen 15 und 17 als archimedische oder logarithmische Spirale auszubilden. Auch ist es möglich, die Steigung der Spirale winkelabhängig zu gestalten.

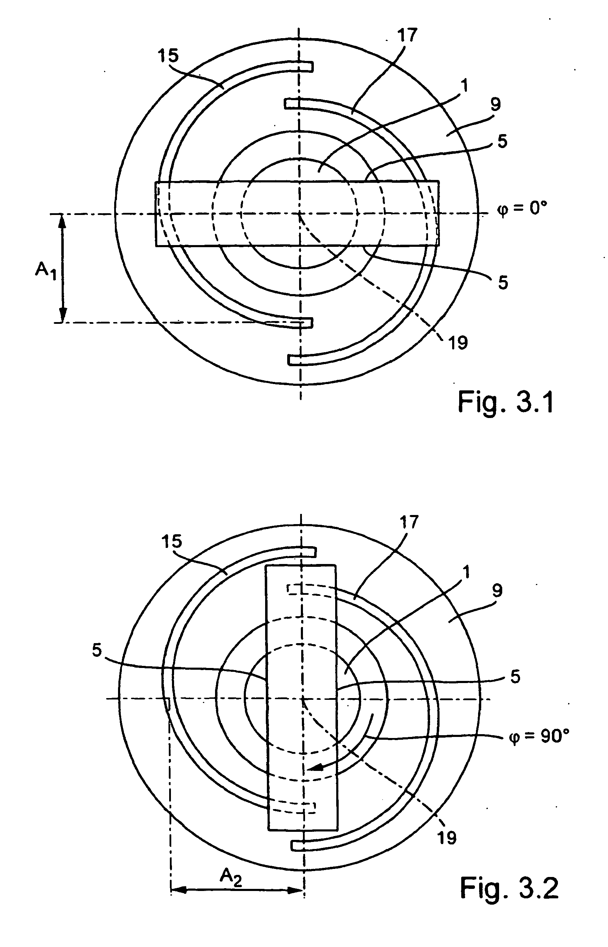

Wenn der Einstellring 9 relativ zu der Linearführung 5 der ersten Welle verdreht wird, dann ändert sich auch der Abstand des Teils der Führungsrippen 15 und 17, der sich in der Verlängerung der Linearführung 5 befindet. Dieser Zusammenhang wird nachfolgend noch anhand der Figuren 3.1 -3.3 näher erläutert.

Die Linearführung 5 hat im Wesentlichen zwei Aufgaben. Die erste Aufgabe besteht darin, Drehmomente von der ersten Welle 1 auf einen Kurbelzapfen (nicht dargestellt) zu übertragen. Die zweite Aufgabe der Linearführung 5 besteht darin, eine radiale Verschiebbarkeit des nicht dargestellten Kurbelzapfens relativ zur Drehachse 19 zu ermöglichen.

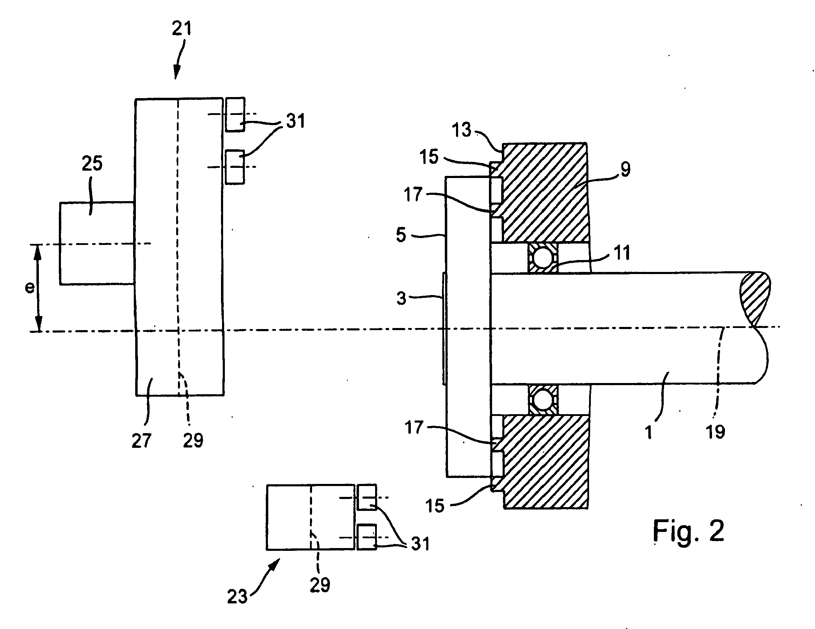

In Figur 2 sind der Einstellring 9 und die erste Welle 1 sowie ein Kurbelzapfen 21 und ein Ausgleichsgewicht 23 in einer Explosionsdarstellung dargestellt. Des Weiteren ist die erste Welle 1 und mit ihr die Linearführung 5 verglichen mit der Darstellung gemäß Figur 1 um 90° verdreht dargestellt.

Der Kurbelzapfen 21 umfasst einen zylindrischen Zapfen 25 und einen Führungskörper 27. Der zylindrische Zapfen 25 ist um eine Exzentrizität e versetzt zur Drehachse 19 der ersten Welle angeordnet. Um die Verschiebbarkeit in radialer Richtung des Kurbelzapfens 21 relativ zur Drehachse 19 der ersten Welle zu gewährleisten, ist in dem Führungskörper 27 eine prismatische Nut 29 mit rechteckigem Querschnitt ausgearbeitet. Die Nut 29 dient zur Aufnahme der Linearführung 5. Bei einem ersten und sehr einfachen Ausführungsbeispiel ist die Linearführung 5 ein als Vollmaterial mit rechteckigem Querschnitt ausgebildet, das in der Nut 29 gleitend geführt ist. Eine bevorzugte Variante sieht vor, dass die Linearführung 5 eine handelsübliche Linearführung, insbesondere mit Wälzkörpern (nicht dargestellt), ausgebildet ist, die einerseits mit der ersten Welle 1 und andererseits mit dem Führungskörper 27 verbunden ist. Dabei findet die Relativbewegung zwischen der ersten Welle 1 und dem Führungskörper 27 innerhalb der Linearführung 5 und mit Hilfe von Wälzkörpern statt. Solche Linearführungen können auch Kräfte zwischen erster Welle 1 und dem Führungskörper 27 in orthogonal zur Längsachse der Linearführung übertragen.

In anderen Worten: Der Kurbelzapfen 21 kann mit der Nut 27 auf der Linearführung 5 aufgesetzt werden und in radialer Richtung relativ zur Drehachse 19 der ersten Welle 1 verschoben werden. Durch die Linearführung 5 kann, wie bereits erwähnt, gleichzeitig ein Drehmoment von der ersten Welle 1 auf den Kurbelzapfen 21 übertragen werden.

An der dem Einstellring 9 zugewandten Seite des Führungskörpers 27 sind zwei Rollen 31 befestigt. Die lichte Weite zwischen den beiden Rollen 31 entspricht der Dicke der ersten Rippe 15. Dies bedeutet nichts anderes, als dass der Kurbelzapfen 21, sobald er mit der Nut 29 auf die Linearführung 5 aufgesetzt wird, in radialer Richtung durch die erste Führungsrippe 15 fixiert ist. Selbstverständlich ist dabei darauf zu achten, dass die Rollen 31 möglichst spielfrei an der ersten Führungsrippe 15 anliegen.

Wenn nun der Einstellring 9 relativ zur ersten Welle 1 verdreht wird, ändert sich auch die Exzentrizität e des zylindrischen Zapfens 25, da die erste Führungsrippe 15 spiralförmig angeordnet ist.

Entsprechendes gilt für das Ausgleichsgewicht 23. Das Ausgleichsgewicht weist ebenfalls eine Nut 29 und zwei Rollen 31 auf, die formschlüssig mit der zweiten Führungsrippe 17 zusammen wirken, sobald das Ausgleichsgewicht 23 auf die Linearführung 5 aufgesteckt wird. Diese Rollen 31 wirken mit der zweiten Führungsrippe 17 in gleicher Weise, wie die Rollen 31 des Kurbelzapfens 21 mit der ersten Rippe 15 zusammen. Dadurch ist auch eine radiale Verschiebbarkeit des Ausgleichsgewichts 23 relativ zur Drehachse 19 vorhanden.

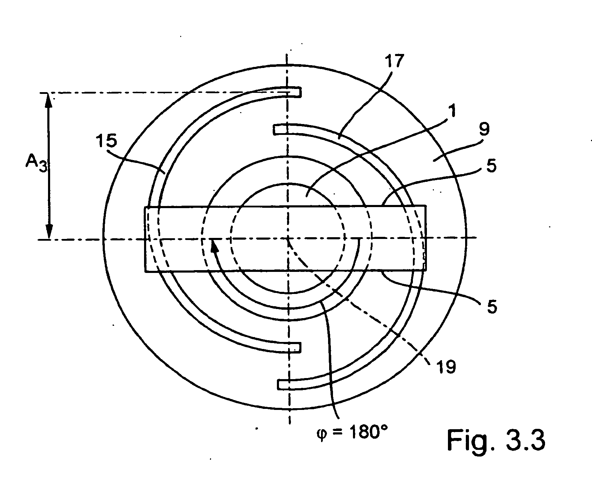

Wenn nun der Einstellring 9 relativ zur ersten Welle 1 verdreht wird, wandern der Kurbelzapfen 21 und das Ausgleichsgewicht 23 entsprechend der Relativdrehung des Einstellrings 9 in radialer Richtung nach außen oder nach innen. Diese Kinematik wird nachfolgend anhand der Figur 3 noch etwas näher erläutert. Die Figur 3.1 entspricht der Draufsicht gemäß Figur 1. In dieser Draufsicht verläuft die Längsachse der Linearführung 5 waagerecht, entsprechend einem Verdrehwinkel ϕ = 0°. In orthogonaler Richtung zur Längsachse der Linearführung 5 hat der Abstand zwischen der Drehachse 9 und dem Anfang der ersten Führungsrippe 15 ist in Figur 1 den Betrag A₁.

In Figur 3.2 ist die erste Welle 19 relativ zum Einstellring 9 um 90° verdreht dargestellt. Der Verdrehwinkel ϕ beträgt somit 90°. In dieser Darstellung verläuft die Längsachse der Linearführung 5 in vertikaler Richtung. Entsprechend ist der Abstand der orthogonal zu der Längsachse der Linearführung 5 befindlichen Teils der ersten Führungsrippe 15 gleich A₂. Der Abstand A₂ ist größer als der Abstand A₁ in Figur 3.1.

Wenn man nun, wie in Figur 3.3 dargestellt, die erste Welle 1 relativ zum Einstellring 9 weiterdreht, so dass sich ein Verdrehwinkel ϕ von 180° ergibt, dann stellt sich ein Abstand A₃ zwischen der Drehachse 19 der ersten Welle 1 und der ersten Führungsrippe 15 in orthogonaler Richtung zur Längsachse der Linearführung 5 ein. Es gilt: A₃ > A₂ > A₁. In anderen Worten: Durch die erfindungsgemäße relative Verdrehung zwischen Einstellring 9 und erster Welle 1 ist es möglich, den Abstand zwischen der Drehachse 19 der ersten Welle 1 und der ersten Führungsrippe 15 kontinuierlich zu verändern. Als Minimalwert ist der Abstand A₁ (ϕ = 0°) konstruktiv festgelegt. Der Maximalwert ist bei einem Verdrehwinkel ϕ = 180° erreicht und hat in Figur 3.3 die Bezeichnung A₃. Es versteht sich von selbst, dass die Werte A₁ und A₃ durch eine entsprechende Gestaltung der ersten Führungsrippe 15 entsprechend den Erfordernissen des Anwendungsfalls festgelegt werden kann.

Es ist auch möglich, anstelle kreissegmentförmiger Führungsrippen 15 und 17 die Führungsrippen beispielsweise als archimedische oder logarithmische Spirale oder mit einer freien Form, die den Anforderungen des Anwendungsfalls entsprechend ausgebildet ist, auszuführen.

Die Kinematik betreffend das Ausgleichsgewicht 23 entspricht der Kinematik des Kurbelzapfens 21. Der einzige Unterschied besteht darin, dass das Ausgleichsgewicht 23 mit seinen Rollen 31 in die zweite Führungsrippe 17 eingreift. Diese zweite Führungsrippe hat die gleiche Geometrie wie die erste Führungsrippe 15 und ist um 180° versetzt angeordnet. Dadurch ist gewährleistet, dass das Ausgleichsgewicht stets eine Verschiebung in radialer Richtung erfährt, die vom Betrag her gleich groß ist wie die Verschiebung des Kurbelzapfens 21, aber entgegengesetzt gerichtet ist. Dadurch kann ein Massenausgleich zwischen dem Kurbelzapfen 21 und dem Ausgleichsgewicht 23 unabhängig von der Exzentrizität e des zylindrischen Zapfens 25 erreicht werden.

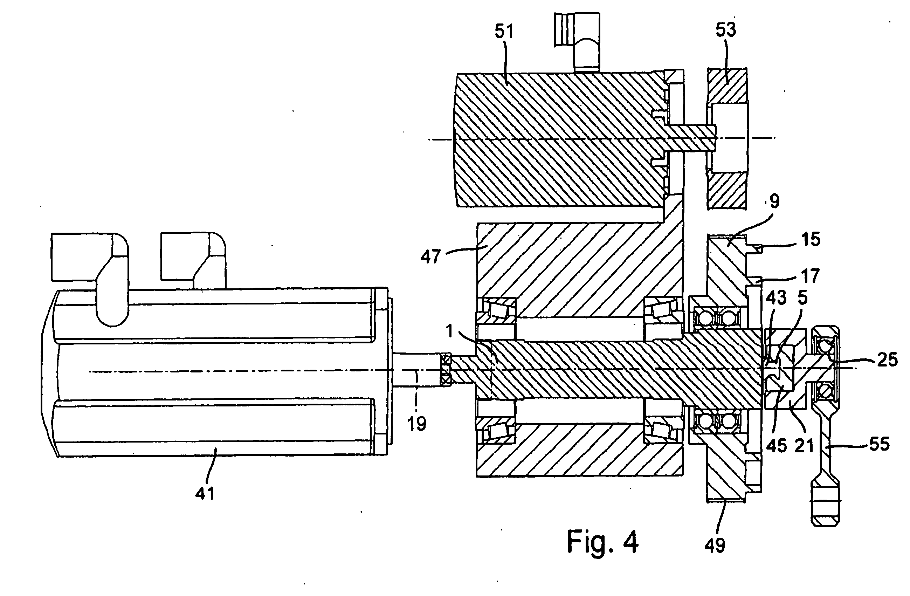

In Figur 4 ist ein Ausführungsbeispiel des erfindungsgemäßen verstellbaren Exzenterantriebs im Schnitt dargestellt. Gleiche Bauteile werden mit den gleichen Bezugszeichen versehen und es gilt das bezüglich der anderen Figuren Gesagte entsprechend.

Die erste Welle 1 wird über einen ersten elektrischen Antrieb 41 angetrieben. Die Linearführung 5 ist, wie sich aus der Schnittdarstellung gemäß Figur 4 ergibt, als ein handelsübliches Normteil mit einer Führungsschiene 43 und einem Schlitten 45. Die Führungsschiene 43 ist fest mit der Stirnseite der ersten Welle verbunden, während der Führungsschlitten 45 in eine Nut 47 des Kurbelzapfens 21 eingesetzt ist.

Die erste Welle 1 ist mittels Kegelrollenlager in einem Gehäuse 47 axial und radial gelagert. Der Einstellring 9 ist auf der ersten Welle 1 mit zwei Rillenkugellagern gelagert. Der Einstellring 9 weist an seinem Außendurchmesser eine Verzahnung 49 für einen Zahnriemen (nicht dargestellt) auf. Angetrieben wird der Einstellring 9 durch einen zweiten elektrischen Antrieb 51. Dieser zweite elektrische Antrieb weist eine Riemenscheibe 53 auf, die fluchtend zum Einstellring 9 angeordnet ist. Über die Riemenscheibe 53 und den Einstellring 9 wird ein nicht dargestellter Zahnriemen gelegt, so dass eine schlupffreie Übertragung der Drehbewegung des zweiten elektrischen Antriebs 51 auf den Einstellring 9 gewährleistet ist. Durch eine entsprechende Ansteuerung des ersten Antriebs 41 und des zweiten Antriebs 51 ist es möglich, die Drehzahl der ersten Welle 1 und des Einstellrings 9 exakt zu steuern. Es ist demzufolge möglich, dass die erste Welle 1 und der Einstellring 9 mit exakt der gleichen Drehgeschwindigkeit rotieren, so dass keine Relativbewegung beziehungsweise Drehbewegung des Einstellrings 9 relativ zur ersten Welle 1 stattfindet. In diesem Zustand bleibt der Hub des zylindrischen Zapfens 25 konstant. Wenn nun, durch eine entsprechende Ansteuerung beispielsweise des zweiten elektrischen Antriebs, die Drehzahl des Einstellrings 9 kurzfristig etwas erhöht wird oder verringert wird, verdreht sich der Einstellring 9 relativ zur ersten Welle. Infolgedessen wird, wie anhand der Figuren 3 ausführlich erläutert, der Hub des zylindrischen Zapfens 25 in erfindungsgemäßer Weise verändert.

Ein Pleuel 55, der drehbar an dem zylindrischen Zapfen 25 gelagert ist, dient dazu, die Kreisbewegung des Zapfens 25 in eine oszillierende Linearbewegung umzusetzen.

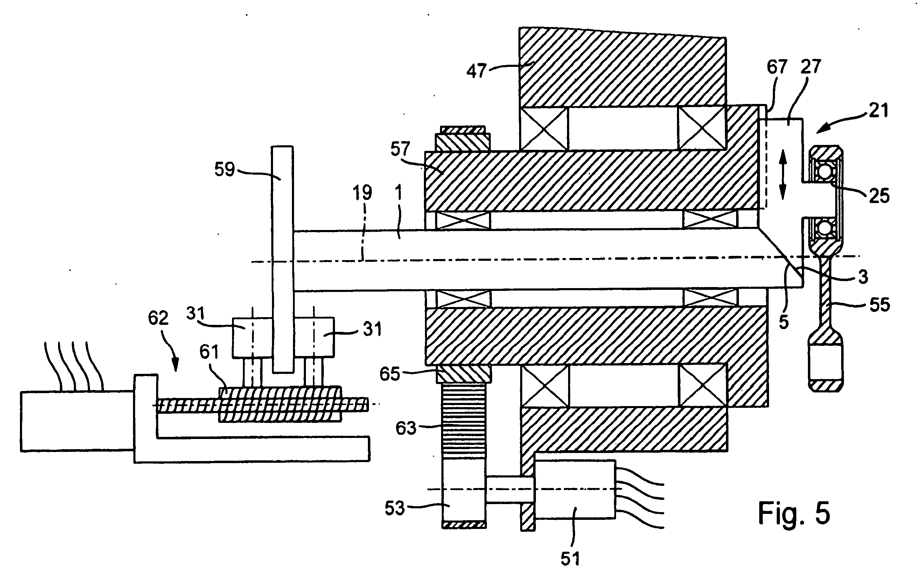

In Figur 5 ist ein weiteres Ausführungsbeispiel eines erfindungsgemäßen einstellbaren Exzenterantriebs dargestellt. Gleiche Bauteile haben das gleiche Bezugszeichen und es gilt das bezüglich der anderen Ausführungsbeispiele Gesagte entsprechend.

Bei diesem Ausführungsbeispiel ist koaxial zur ersten Welle 1 eine zweite Welle 57 angeordnet, die als Hohlwelle ausgebildet ist. Die zweite Welle 57 ist im Gehäuse 47 gelagert. In einer Durchgangsbohrung der zweiten Welle 57 ist die erste Welle 1 ebenfalls in radialer Richtung gelagert. In axialer Richtung ist die erste Welle 1 relativ zur zweiten Welle 57 verschiebbar.

Bei diesem Ausführungsbeispiel wird der Kurbelzapfen 21 von der zweiten Welle 57 angetrieben, während die Verstellung des Hubs von einem Linearantrieb mit Hilfe der ersten Welle 1 erfolgt.

An dem in Figur 5 linken Ende der ersten Welle 1 ist eine Scheibe 59 vorhanden, die zwischen zwei Rollen 31 in axialer Richtung fixiert wird. Die Rollen 31 sind auf einem Schlitten 61 montiert. Dieser Schlitten 61 kann über einen Linearantrieb 62, der hier als Gewindespindel mit elektrischem Antrieb, in axialer Richtung verschoben werden. Die Stellbewegung des Linearantriebs 62 ist durch einen Doppelpfeil angedeutet. Selbstverständlich können auch andere Bauformen von Linearantrieben zum Verstellen des Schlittens 61 beziehungsweise der ersten Welle 1 herangezogen werden.

Die zweite Welle 57 wird durch den zweiten elektrischen Antrieb 51 und einen Zahnriemen 63 angetrieben. Zu diesem Zweck ist auf der zweiten Welle 57 eine Riemenscheibe 65 angebracht. Die zweite Welle 57 weist an ihrem in Figur 5 rechten Ende eine Planfläche 67 auf. In dieser Planfläche 67 ist eine radial verlaufende Nut 69 eingearbeitet. In diese Nut 69 wird der Kurbelzapfen 21 beziehungsweise dessen Grundkörper 27 radial geführt.

Des Weiteren ist die Stirnseite 3 der ersten Welle 1 kegelstumpfförmig ausgebildet und weist eine Linearführung 5 auf, die den Kurbelzapfen 21 beziehungsweise den Grundkörper 27 des Kurbelzapfens formschlüssig an die erste Welle 1 koppelt. Dadurch wird eine axiale Verschiebung der ersten Welle 1 mit Hilfe des Linearantriebs 62 in eine radiale Verschiebung des Kurbelzapfens 21 umgesetzt.

Durch die Führung des Kurbelzapfens 21 in der radial angeordneten Nut 67 der zweiten Welle 57 können auch große Drehmomente auf den Kurbelzapfen 21 übertragen werden. Durch die formschlüssige Verbindung von erster Welle 1 und dem Kurbelzapfen 21 mit Hilfe der Linearführung 5 ist auch gewährleistet, dass der Kurbelzapfen 21 nicht aufgrund der auf ihn wirkenden Fliehkräfte nach außen getragen wird. Die auf den Kurbelzapfen 21 wirkenden Fliehkräfte werden auch von der Linearführung 5 auf die erste Welle 1 und deren Lagerung (ohne Bezugszeichen) in der zweiten Welle 57 übertragen. In gleicher Weise kann das nicht dargestellte Ausgleichsgewicht 23 in radialer Richtung verstellt werden.

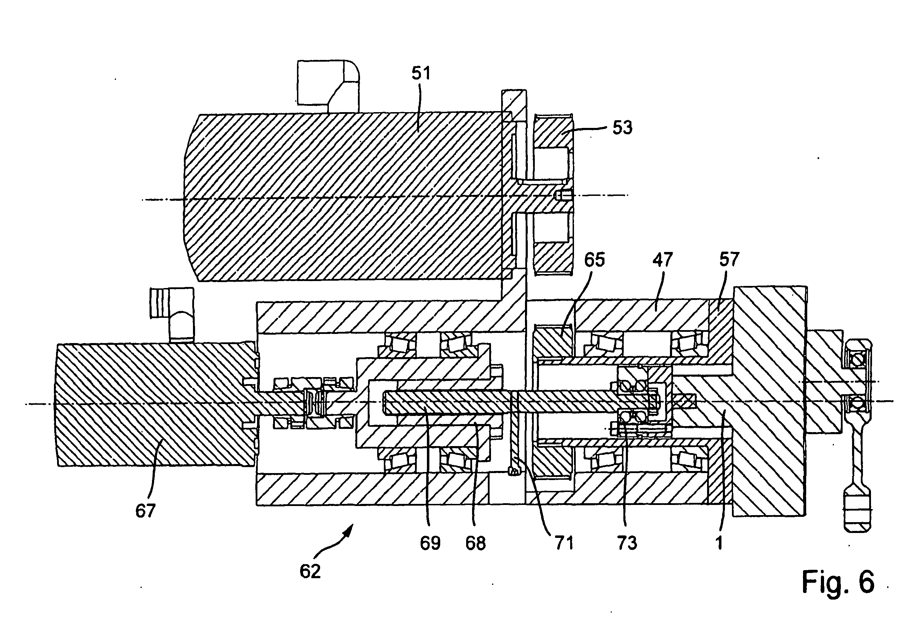

In Figur 6 ist ein weiteres Ausführungsbeispiel eines Linearantriebs 62 dargestellt. Bei diesem Ausführungsbeispiel ist die erste Welle 1 relativ kurz. Die Lagerung der ersten Welle 1 ist nicht dargestellt.

Der Mechanismus mit dem der Hub des Kurbelzapfens 21 verstellt werden kann entspricht dem in Figur 5 dargestellten und ist daher in Figur 6 nicht nochmals detailliert gezeichnet. Bei dem in Figur 6 dargestellten Stellantrieb 62 arbeitet ein Elektromotor 67 auf eine Mutter 68, die mit einer Gewindestange 69 zusammenwirkt. Die Gewindestange 69 ist durch eine Schraube 71 drehfest, aber axial verschiebbar im Gehäuse 47 angeordnet. Ober eine Lagerung 73 wird eine Axialbewegung der Gewindestange 69 auf die erste Welle 1 übertragen.

Bei diesem Ausführungsbeispiel muss der elektrische Antrieb nur dann aktiviert werden, wenn der Hub des Kurbelzapfens 21 verstellt werden soll. Die erste Welle 1 wird mittelbar über die zweite Welle 57 angetrieben. Die Drehmomentübertragung kann dabei über eine nicht dargestellte Verzahnung oder ausschließlich über den Kurbelzapfen 21 und die Linearführung 5 (siehe Figur 5) erfolgen.

## Patentansprüche

1. Einstellbarer Exzenterantrieb mit einer ersten Welle (1) und mit einem Kurbelzapfen (21), wobei der Kurbelzapfen (21) mit der ersten Welle (1) verbunden ist, wobei ein radialer Abstand (A) zwischen dem Kurbelzapfen (21) und einer Drehachse (19) der ersten Welle (1) einstellbar ist, mit einem koaxial zu der ersten Welle (1) angeordneten Einstellring (9), wobei der Einstellring (9) relativ zur ersten Welle (1) verdrehbar ist, wobei der Einstellring (9) erste Führungsmittel (15) aufweist, und wobei der Kurbelzapfen (21) formschlüssig mit den ersten Führungsmitteln (15) gekoppelt ist, wobei die ersten Führungsmittel als spiralförmige Rippe (15) oder Nut ausgebildet sind, **dadurch gekennzeichnet, dass** der Einstellring (9) zweite Führungsmitteln (17) aufweist, dass die zweiten Führungsmittel als spiralförmige Rippe (17) oder Nut ausgebildet sind, dass der Kurbelzapfen (21) Rollen (31) oder Zapfen umfasst, welche in radialer Richtung formschlüssig die Rippe (15) umgreifen oder in die Nut eingreift, und dass um 180° versetzt zu dem Kurbelzapfen (21) ein Ausgleichsgewicht (23) angeordnet ist, welches formschlüssig mit den zweiten Führungsmitteln (17) gekoppelt ist, so dass ein radialer Abstand (A) zwischen dem Ausgleichsgewicht (23) und der Drehachse (19) der ersten Welle (1) einstellbar ist.

2. Exzenterantrieb nach Anspruch 1, **dadurch gekennzeichnet, dass** der Einstellring (9) mit einer zweiten Welle (57) verbunden ist, und dass die zweite Welle (57) koaxial zu der ersten Welle (1) angeordnet ist.

3. Exzenterantrieb nach einem der vorhergehenden Ansprüche, **dadurch gekennzeichnet, dass** die erste Welle (1) eine im Wesentlichen radial zur Drehachse der ersten Welle (1) angeordnete Linearführung (5) für den Kurbelzapfen (21) aufweist.

4. Exzenterantrieb nach Anspruch 3, **dadurch gekennzeichnet, dass** die erste Welle (1) an einer Stirnseite (3) eine Linearführung (5) aufweist, und dass ein Führungskörper (27) des Kurbelzapfens (21) eine mit der Linearführung (5) zusammenwirkende Führungsnut (29) aufweist.

5. Exzenterantrieb nach Anspruch 3, **dadurch gekennzeichnet, dass** die erste Welle (1) eine kegelstumpfförmige Stirnseite (3) aufweist, und dass die Linearführung (5) an der Stirnseite (3) angeordnet ist und mit dem Führungskörper (27) des Kurbelzapfens (21) zusammenwirkt.

6. Exzenterantrieb nach einem der vorhergehenden Ansprüche, **dadurch gekennzeichnet, dass** die erste Welle (1) und der Einstellring (9) jeweils von einen elektrischen Antrieb (41, 51) angetrieben werden, und dass Drehgeschwindigkeit und/oder Phasenlage von erster Welle (1) und Einstellring (9) durch die Steuerung der elektrischen Antriebe (41, 51) eingestellt werden.

7. Exzenterantrieb nach einem der Ansprüche 1 bis 5, **dadurch gekennzeichnet, dass** die erste Welle (1) und der Einstellring (9) mechanisch miteinander gekoppelt sind, und dass zwischen erster Welle (1) und Einstellring (9) Mittel zum Verstellen der Phasenlage zwischen erste Welle (1) und der Einstellring (9) vorgesehen sind.

8. Exzenterantrieb nach Anspruch 7, **dadurch gekennzeichnet, dass** als Mittel zum Verstellen der Phasenlage zwischen erster Welle (1) und Einstellring (9) ein hydraulischer Schwenkmotor oder ein Nockenwellenverstellsystem eines Verbrennungsmotors eingesetzt wird.

9. Exzenterantrieb nach Anspruch 8, **dadurch gekennzeichnet, dass** als Mittel zum Verstellen der Phasenlage zwischen erster Welle (1) und Einstellring (9) ein Nockenwellenverstellsystem mit Selbsthemmung, mit Schrägverzahnung oder einem verstellbaren Ketten- oder Riemenantrieb zwischen erster Welle (1) und Einstellring (9) eingesetzt wird.

10. Exzenterantrieb nach einem der vorhergehenden Ansprüche, **dadurch gekennzeichnet, dass** er zur Verstellung des Hubs eines oszillierenden Werkzeugs in einer Werkzeugmaschine, insbesondere in einer Finish-Maschine, eingesetzt wird.

## Claims

1. An adjustable eccentric drive with a first shaft (1) and a crank pin (21), wherein the crank pin (21) is connected to the first shaft (1), wherein a radial distance (A) between the crank pin (21) and an axis of rotation (19) of the first shaft (1) is adjustable, with an adjusting collar (9) arranged coaxially toward the first shaft (1), whereby the adjusting collar (9) is rotatable in relation to the first shaft (1), wherein the adjusting collar (9) has first guide means (15), and wherein the crank pin (21) is positively coupled with the first guide means (15), wherein the first guide means (15) are designed as spiral-shaped rib (15) or groove, **characterized in that** the adjusting collar (9) comprises second guide means (17), that the second guide means are designed as spiral-shaped rib (17) or groove, that the crank pin (21) includes rollers (31) or pins which in radial direction positively embrace the rib (15) or engage into the groove, and that a balancing weight (23) is positioned offset by 180 degrees in relation to the crank pin (21), which is positively coupled with the second guide means (17), so that a radial distance (A) between the balance weight (23) and the rotating axis (19) of the first shaft (1) can be adjusted.

2. The eccentric drive of claim 1, **characterized in that** the adjusting collar (9) is connected with a second shaft (57) and that the second shaft (57) is arranged coaxially in relation to the first shaft (1).

3. The eccentric drive of one of the preceding claims, **characterized in that** the first shaft (1) includes a linear guide (5) positioned substantially radially toward the axis of rotation of the first shaft (1) for the crank pin (21).

4. The eccentric drive of claim 3, **characterized in that** the first shaft (1) comprises on a front face (3) a linear guide (5) and that a guide body (27) of the crank pin (21) comprises a guide groove (29) for interacting with the linear guide (5).

5. The eccentric drive of claim 3, **characterized in that** the first shaft (1) comprises a truncated cone-shaped front face (3) and that the linear guide (5) is positioned on the front face (3) for interacting with the guide body (27) of the crank pin (21).

6. The eccentric drive of one of the preceding claims, **characterized in that** the first shaft (1) and the adjusting collar (9) are respectively driven by an electric drive (41, 51) and that rate of revolution and/or phase angle of first shaft (1) and adjusting collar (9) are adjusted by the control unit of the electric drives (41, 51).

7. The eccentric drive of one of the claims 1 to 5, **characterized in that** the first shaft (1) and the adjusting collar (9) are coupled mechanically with each other, and means for adjusting the phase angle between the first shaft (1) and the adjusting collar (9) are provided between first shaft (1 and adjusting collar (5).

8. The eccentric drive of claim 7, **characterized in that** as means for adjusting the phase angle between first shaft (1) and adjusting collar (9) a hydraulic swivel motor or a camshaft adjusting system of an internal combustion motor is used.

9. The eccentric drive of claim 8, **characterized in that** as means for adjusting the phase angle between first shaft (1) and adjusting collar (9) a camshaft adjusting system with self-locking, oblique gearing or adjustable chain or belt drive is used between first shaft (1) and adjusting collar (9).

10. The eccentric drive of one of the preceding claims, **characterized in that** it is used for adjusting the stroke of an oscillating tool in a tool machine, especially in a finishing machine.

## Revendications

1. Système d'entraînement à excentrique réglable, comportant un premier arbre (1) et comportant un maneton (21), ledit maneton (21) étant relié au premier arbre (1), une distance radiale (A) pouvant être réglée entre le maneton (21) et un axe de rotation (19) du premier arbre (1), comportant une bague de réglage (9), agencée coaxialement au premier arbre (1), ladite bague de réglage (9) étant apte à tourner par rapport au premier arbre (1), la bague de réglage (9) comportant des premiers moyens de guidage (15), et le maneton (21) étant couplé par conjugaison de forme avec les premiers moyens de guidage (15), les premiers moyens de guidage étant réalisés sous la forme d'une nervure (15) ou rainure hélicoïdales, **caractérisé en ce que** la bague de réglage (9) comporte des deuxièmes moyens de guidage (17), **en ce que** les deuxièmes moyens de guidage sont réalisés sous la forme d'une nervure (17) ou rainure hélicoïdales, **en ce que** le maneton (21) comporte des galets (31) ou tétons, qui enserrent la nervure (15) par conjugaison de forme dans le sens radial ou s'engagent dans la rainure, et **en ce qu'**une masselotte d'équilibrage (23) est agencée en étant décalée de 180° par rapport au maneton (21) et est couplée par conjugaison de forme avec les deuxièmes moyens de guidage (17), de telle sorte qu'une distance radiale (A) peut être réglée entre la masselotte d'équilibrage (23) et l'axe de rotation (19) du premier arbre (1).

2. Système d'entraînement à excentrique selon la revendication 1, **caractérisé en ce que** la bague de réglage (9) est reliée à un deuxième arbre (57), et **en ce que** le deuxième arbre (57) est agencé coaxialement au premier arbre (1).

3. Système d'entraînement à excentrique selon l'une quelconque des revendications précédentes, **caractérisé en ce que** le premier arbre (1) comporte un guidage linéaire (5) pour le maneton (21), lequel est agencé sensiblement radialement par rapport à l'axe de rotation du premier arbre (1).

4. Système d'entraînement à excentrique selon la revendication 3, **caractérisé en ce que** le premier arbre (1) comporte un guidage linéaire (5) sur une face frontale (3), et **en ce qu'**un corps de guidage (27) du maneton (21) comporte une rainure de guidage (29) coopérant avec le guidage linéaire (5).

5. Système d'entraînement à excentrique selon la revendication 3, **caractérisé en ce que** le premier arbre (1) comporte une face frontale (3) en forme de cône tronqué, et **en ce que** le guidage linéaire (5) est agencé sur la face frontale (3) et coopère avec le corps de guidage (27) du maneton (21).

6. Système d'entraînement à excentrique selon l'une quelconque des revendications précédentes, **caractérisé en ce que** le premier arbre (1) et la bague de réglage (9) sont entraînés chacun par un système d'entraînement électrique (41, 51), et **en ce que** la vitesse de rotation et/ou la position de phase du premier arbre (1) et de la bague de réglage (9) sont réglées au moyen de la commande des systèmes d'entraînement électriques (41, 51).

7. Système d'entraînement à excentrique selon l'une quelconque des revendications 1 à 5, **caractérisé en ce que** le premier arbre (1) et la bague de réglage (9) sont couplés mécaniquement l'un à l'autre, et **en ce qu'**entre le premier arbre (1) et la bague de réglage (9) sont prévus des moyens pour le réglage de la position de phase entre le premier arbre (1) et la bague de réglage (9).

8. Système d'entraînement à excentrique selon la revendication 7, **caractérisé en ce que** pour réaliser les moyens pour le réglage de la position de phase entre le premier arbre (1) et la bague de réglage (9), on utilise un moteur oscillant hydraulique ou un système de réglage à arbre à came d'un moteur à combustion interne.

9. Système d'entraînement à excentrique selon la revendication 8, **caractérisé en ce que** pour réaliser les moyens pour le réglage de la position de phase entre le premier arbre (1) et la bague de réglage (9), on utilise un système de réglage à arbre à came à blocage automatique, avec une denture oblique, ou un système d'entraînement à chaîne ou courroie réglable entre le premier arbre (1) et la bague de réglage (9).

10. Système d'entraînement à excentrique selon l'une quelconque des revendications précédentes, **caractérisé en ce qu'**il est utilisé pour le réglage de la course d'un outil à oscillations dans une machine-outil, en particulier dans une machine pour travaux de finition.
